# EUROPÄISCHE PATENTSCHRIFT

(11) **EP 3 251 902 B1**
(45) Veröffentlichungstag und Bekanntmachung des Hinweises auf die Patenterteilung: **25.09.2019**
(21) Anmeldenummer: 17154727.6
(22) Anmeldetag: 06.02.2017
(51) Int. Cl.: B60R 25/20, A01D 41/127, B60R 25/24

(54) **BERECHTIGUNGSSYSTEM ZUM BETREIBEN VON LANDWIRTSCHAFTLICHEN ARBEITSMASCHINEN**
AUTHORISATION SYSTEM FOR OPERATING AGRICULTURAL MACHINES
SYSTÈME D'AUTORISATION DE FONCTIONNEMENT D'ENGINS DE TRAVAUX AGRICOLES

(30) Priorität: 03.06.2016 DE 102016110327
(43) Veröffentlichungstag der Anmeldung: 06.12.2017
(73) Patentinhaber: CLAAS Selbstfahrende Erntemaschinen GmbH, 33428 Harsewinkel (DE)
(72) Erfinder: Judaschke, Stefan, 33775 Versmold (DE); Jeppe, Eckehardt, 34289 Zierenberg (DE); Bultschnieder, Ralf, 33378 Rhed-Wiedenbrück (DE); Höttermann, Ralph, 49124 Georgsmarienhütte (DE)
(74) Vertreter: CLAAS Gruppe

(56) Entgegenhaltungen:
- EP-A1- 1 741 329
- EP-A1- 2 183 954
- EP-A2- 2 110 012
- WO-A1-2014/130523
- WO-A2-2007/106875
- DE-A1- 10 331 842
- US-A1- 2009 143 878

## Beschreibung

Die Erfindung betrifft ein Berechtigungssystem zum Betreiben von landwirtschaftlichen Arbeitsmaschinen gemäß dem Oberbegriff von Anspruch 1 sowie eine Identifikationsvorrichtung, insbesondere einen Funkschlüssel, für ein solches Berechtigungssystem gemäß dem Oberbegriff von Anspruch 15.

Für den optimalen Betrieb von landwirtschaftlichen Arbeitsmaschinen, worunter insbesondere ein wirtschaftlich effizienter Betrieb verstanden werden kann, ist die richtige Einstellung einer Vielzahl von Betriebsparametern der jeweiligen landwirtschaftlichen Arbeitsmaschine für ihre jeweilige Bearbeitung erforderlich. Diese Betriebsparameter betreffen sowohl die landwirtschaftliche Arbeitsmaschine insgesamt, z. B. eine Fahrgeschwindigkeit, als auch die einzelnen Arbeitsorgane der landwirtschaftlichen Arbeitsmaschine, welche je nach Typ der landwirtschaftlichen Arbeitsmaschine in unterschiedlicher Art und Anzahl vorhanden sind. Ebenso können Vorrichtungen der Arbeitsmaschine speziell für den Bediener, wie etwa die Sitze, die Klimatisierung oder das Layout einer graphischen Bedienvorrichtung, je nach Bediener unterschiedlich eingestellt wer-den.

Das Dokument US 2009/143878 A1 offenbart ein Berechtigungssystem zum Betreiben von landwirtschaftlichen Arbeitsmaschinen, wobei ein Arbeitsprozess die Bearbeitung eines Feldes durch eine Flotte von Arbeitsmaschinen umfasst. Das Dokument US 2009/143878 A1 offenbart ebenfalls eine Identifikationsvorrichtung für ein Berechtigungssystem.

Aus dem Stand der Technik und speziell aus der EP 0 870 654 A2, von welcher die vorliegende Erfindung als nächstkommend ausgeht, ist es bekannt, einem Bediener einer landwirtschaftlichen Arbeitsmaschine, Parameter zur Einstellung der Arbeitsmaschine zuzuordnen, welche Parameter automatisch übernommen werden, wenn der Bediener die Arbeitsmaschine benutzt. Bei diesem Stand der Technik wird der Umstand ausgenutzt, dass im Bereich der landwirtschaftlichen Arbeitsmaschinen regelmäßig jedem Bediener eine persönliche Identifizierungsvorrichtung, wie etwa ein Schlüssel, zugeordnet ist, mit welcher sich der Bediener bei der jeweiligen Arbeitsmaschine "anmeldet", z. B. durch Starten der Arbeitsmaschine mit dem Schlüssel. Indem nun bestimmte Parameter hinterlegt werden, welche diesem Schlüssel zugeordnet sind, kann die Arbeitsmaschine bzw. eine Rechenvorrichtung der Arbeitsmaschine bei Erkennen eines Bedieners anhand des Schlüssels die ihm zugeordneten Parameter heraussuchen und anwenden. Die hier in Rede stehenden Parameter betreffen Einstellungen, welche an die Person des Bedieners anknüpfen, und zwar speziell an seine Qualifikation, seine Zugangsberechtigungen sowie seine persönlichen Wünsche hinsichtlich verschiedener Komforteinstellungen (Sitzstellung, Klimatisierung etc.). Die sich aus diesem Berechtigungssystem ergebenden Berechtigungen des Bedieners sind von dem jeweils avisierten Arbeitsprozess unabhängig.

Ausgehend von diesem Stand der Technik besteht die Aufgabe der Erfindung darin, ein Berechtigungssystem anzugeben, mit dem sich die Effizienz bei der Bearbeitung eines Feldes durch landwirtschaftliche Arbeitsmaschinen erhöhen lässt.

Das obige Problem wird bei einem Berechtigungssystem zum Betreiben von landwirtschaftlichen Arbeitsmaschinen mit den Merkmalen des Oberbegriffs von Anspruch 1 durch die Merkmale des kennzeichnenden Teils von Anspruch 1 gelöst. Für eine Identifikationsvorrichtung, insbesondere einen Funkschlüssel, mit den Merkmalen des Oberbegriffs von Anspruch 15 wird das Problem durch die Merkmale des kennzeichnenden Teils von Anspruch 15 gelöst.

Wesentlich für die Erfindung ist die Erkenntnis, dass neben Parametern, welche im Wesentlichen auf den Bediener und seine Person zugeschnitten - und damit über mehrere Arbeitsgänge im Wesentlichen invariant sind - die Identifikationsvorrichtung auch für die Zuordnung von Parametern verwendet werden kann, welche sich auf ein Arbeits- oder Anwendungspaket beziehen, welches der Bediener im Rahmen einer Feldbearbeitung abzuarbeiten hat. Eine solche Bearbeitung eines Feldes findet regelmäßig in verschiedenen Bearbeitungsstufen innerhalb einer Prozesskette, mit paralleler Bearbeitung oder mit überlappender Bearbeitung statt. Im Ergebnis haben ggf. verschiedene Bediener zu unterschiedlichen Zeiten eine unterschiedliche Bearbeitung vorzunehmen. So werden Sollfahrspuren auf einem Feld regelmäßig gleichzeitig von mehreren Arbeitsmaschinen abgefahren, wobei die das Feld abdeckenden Sollfahrspuren auf die jeweiligen Arbeitsmaschinen aufgeteilt werden. Das bedeutet aber auch, dass die Bediener der betreffenden Arbeitsmaschinen jeweils eine andere Sollfahrspur zugewiesen bekommen. Die Erfindung hat erkannt, dass auf eine analoge Weise, auf welche die nur dem Bediener zugeordneten Parameter anhand der Identifikationsvorrichtung des Bedieners aufgerufen werden können, auch diejenigen Parameter zugeordnet werden können, welche dem jeweiligen Bediener für die Abarbeitung seines Anwendungspakets zugeordnet sind. Im Gegensatz zu den Parametern, welche gemäß dem Stand der Technik anhand der Erkennung des Bedieners angewandt werden, sind diese aber regelmäßig von Arbeitsprozess zu Arbeitsprozess bzw. bei mehrmaligem Einsatz des Bedieners innerhalb eines Arbeitsprozesses auch von Einsatz zu Einsatz verschieden. Entsprechend können sie sich auch viel dynamischer während der Bearbeitung verändern.

Grundsätzlich kann es vorgesehen sein, dass die Parameter in einer Speichervorrichtung der jeweiligen Identifikationsvorrichtung, insbesondere des jeweiligen Funkschlüssels, abgelegt werden. Damit liegen, vorzugsweise alle, arbeitsprozessspezifischen Informationen in der Identifikationsvorrichtung, insbesondere in dem Funkschlüssel, vor, die der Bediener bei sich trägt. Dem Bediener stehen somit alle für seine geplante Tätigkeit erforderlichen Informationen unmittelbar zur Verfügung. Die Parameter lassen sich mit geringem Hardwareaufwand direkt in die Identifikationsvorrichtung übertragen.

Bei der bevorzugten Ausgestaltung gemäß Anspruch 2 dagegen ist es so, dass in der Identifikationsvorrichtung ausschließlich dem jeweiligen Bediener zugeordnete Identifizierungsdaten, insbesondere eine ID-Nummer, abgelegt sind bzw. ist.

Die bevorzugte Ausgestaltung des Unteranspruchs 3 betrifft Zugangsberechtigungen als Teil der Parameter, so dass also auch Befugnisse des Bedieners anwendungsabhängig eingestellt werden können.

Die zugeordneten Parameter können auch die Bedienoberfläche der Arbeitsmaschine betreffen. So können durch den Gegenstand des Unteranspruchs 4 auch Anweisungen zum Vornehmen von Handlungen auf den jeweiligen Bediener abgestimmt sein.

Der Unteranspruch 5 wiederum betrifft die Einstellung der Arbeitsgeräte der Arbeitsmaschinen im engeren Sinne durch die Parameter. Wie der Unteranspruch 6 beschreibt, kann eine solche Einstellung der Arbeitsgeräte auch im Ergebnis sowohl zeitlich und räumlich abhängig vom Abfahren einer Sollfahrspur erfolgen.

Die Unteransprüche 10 bis 13 sehen einen von den Arbeitsmaschinen unabhängigen Zentralrechner vor, welcher an der Verwaltung der Parameter beteiligt ist. Das kann einerseits - wie in Unteranspruch 10 beschrieben - die Übertragung der Parameter insbesondere von und zu der Rechenvorrichtung betreffen. Es kann ebenso, gemäß dem jeweiligen Gegenstand der Unteransprüche 12 und 13, eine Aktualisierung der Parameter noch während des laufenden Betriebs betreffen.

Schließlich betrifft der Unteranspruch 14 die bevorzugte Variante der drahtlosen Übertragung von Identifizierungsdaten von der Identifikationsvorrichtung an den Zentralrechner, etwa gemäß dem RFID-Prinzip o.dgl.

Nach der weiteren Lehre gemäß Anspruch 15 wird eine Identifikationsvorrichtung, die dem vorschlagsgemäßen Berechtigungssystem zugeordnet ist, also solche beansprucht.

Wesentlich nach der weiteren Lehre ist, dass die anwendungspaketspezifischen Parameter, also die den avisierten Arbeitsprozess betreffenden Parameter, in einer Speichervorrichtung der Identifikationsvorrichtung, insbesondere des jeweiligen Funkschlüssels, abgelegt werden. Die hiermit verbunden Vorteile wurden oben im Zusammenhang mit Anspruch 2 erläutert. Auf alle Ausführungen zu dem vorschlagsgemäßen Berechtigungssystem darf verwiesen werden.

Weitere Einzelheiten, Merkmale, Ziele und Vorteile der vorliegenden Erfindung werden nachfolgend anhand einer lediglich Ausführungsbeispiele wiedergebenden Zeichnung näher erläutert. In der Zeichnung zeigt
- Fig.1: eine schematische Ansicht einer landwirtschaftlichen Arbeitsmaschine zur Anwendung des vorschlagsgemäßen Berechtigungssystems,
- Fig. 2: eine schematische Übersichtsdarstellung einer Flotte von Arbeitsmaschinen auf einem Feld zur Anwendung eines weiteren Ausführungsbeispiels des vorschlagsgemäßen Berechtigungssystems und

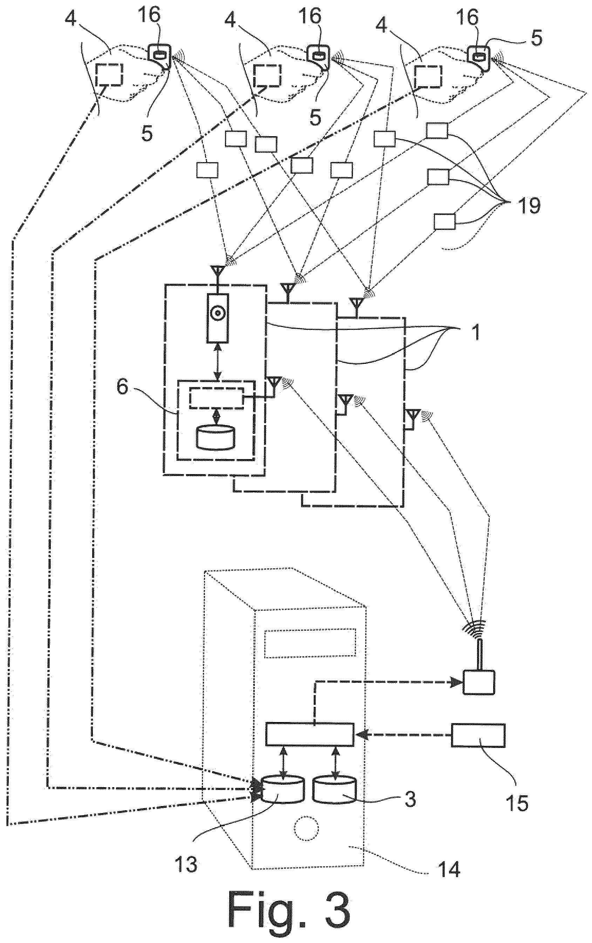

- Fig. 3: eine schematische Darstellung wesentlicher Elemente zur Anwendung eines weiteren Ausführungsbeispiels des vorschlagsgemäßen Berechtigungssystems.

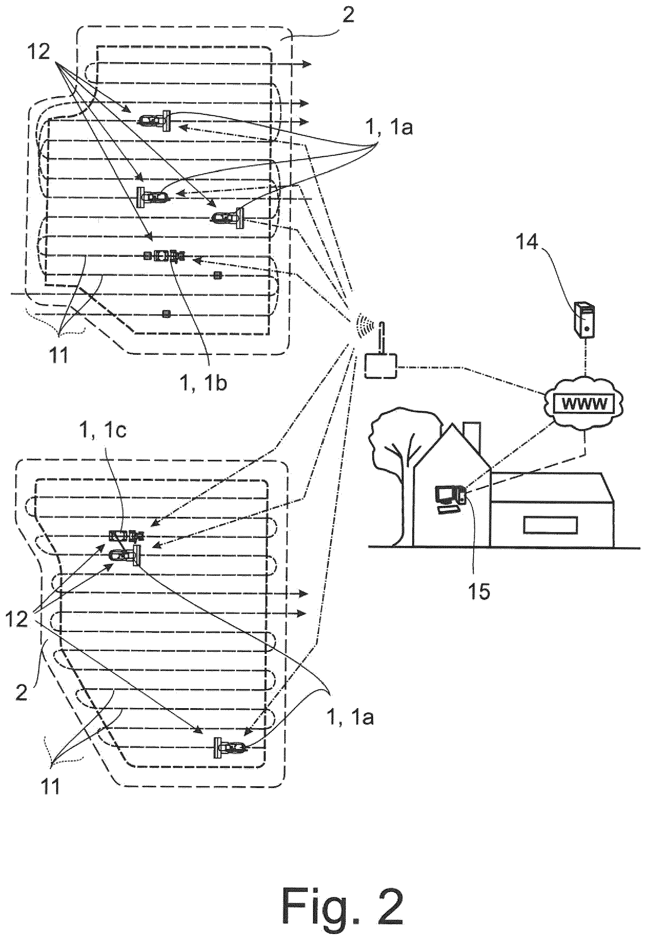

Das vorschlagsgemäße Berechtigungssystem dient dem Betreiben von landwirtschaftlichen Arbeitsmaschinen 1 im Rahmen eines Farmmanagementsystems. Vorschlagsgemäß wird ein Arbeitsprozess definiert, welcher die Bearbeitung eines Feldes 2 durch eine Flotte von Arbeitsmaschinen 1 umfasst, wobei der Arbeitsprozess je ein Anwendungspaket für jede Arbeitsmaschine 1 mit anwendungspaketspezifischen Parametern 3 umfasst. Eine solche Flotte ist speziell in der Fig. 2 dargestellt. Vorschlagsgemäß wird einem jeweiligen Bediener 4 einer der Arbeitsmaschinen 1 das Anwendungspaket zur Bearbeitung durch die jeweilige Arbeitsmaschine 1 zugeordnet. Das Anwendungspaket umfasst die von dem jeweiligen Bediener 4 durch die Arbeitsmaschine 1 oder durch eine funktional zu ihr im relevanten Maße äquivalente Arbeitsmaschine auszuführenden Arbeiten bei der Bearbeitung des Feldes 2 insgesamt. Bei dem vorschlagsgemäßen Verfahren identifiziert sich der jeweilige Bediener 4 durch eine jeweilige Identifikationsvorrichtung 5, hier und vorzugsweise durch einen jeweiligen Funkschlüssel, an einer Rechenvorrichtung 6 der jeweiligen Arbeitsmaschine 1. Ein solcher Funkschlüssel erlaubt ganz allgemein eine drahtlose Kommunikation mit der Rechenvorrichtung 6. Die Rechenvorrichtung 6 kann beispielsweise ein zentrales Steuergerät oder eine Bedieneinheit der jeweiligen Arbeitsmaschine 1 umfassen.

Bei dem erfindungsgemäßen Berechtigungssystem ist es vorgesehen, dass die Rechenvorrichtung 6 basierend auf der Identifizierung des jeweiligen Bedieners 4 eine Vorrichtungsanordnung 7 der jeweiligen Arbeitsmaschine 1 mit den Parametern 3 des dem jeweiligen Bediener 4 zugeordneten Anwendungspakets ansteuert. Die Vorrichtungsanordnung 7 kann grundsätzlich beliebig viele und beliebige Arten von Vorrichtungen der Arbeitsmaschine 1 umfassen. Die Ansteuerung mit den Parametern 3 kann auch in dem Sinne mittelbar sein, dass die Parameter 3 eine Vorschrift zur Berechnung der letztendlichen Ansteuerungsparameter umfasst, so dass die letztendlichen Ansteuerungsparameter auf den Parametern 3 basieren. Dabei können auch weitere Faktoren in die Bestimmung der Ansteuerungsparameter einfließen.

Hier und vorzugsweise weist die jeweilige Identifikationsvorrichtung 5 eine Speichervorrichtung 16 aufweist, wobei die anwendungspaketspezifischen Parameter 3 in einer Speichervorrichtung 16 der jeweiligen Identifikationsvorrichtung 5 abgelegt sind. Grundsätzlich können die Parameter 3 aber auch zentral abgelegt sein, wie noch erläutert wird. Im letztgenannten Fall ist es vorzugsweise so, dass in der Identifikationsvorrichtung 5 ausschließlich dem jeweiligen Bediener 4 zugeordnete Identifizierungsdaten 19 abgelegt sind. Bei den Identifikationsdaten 19 handelt es sich hier und vorzugsweise um eine ID-Nummer.

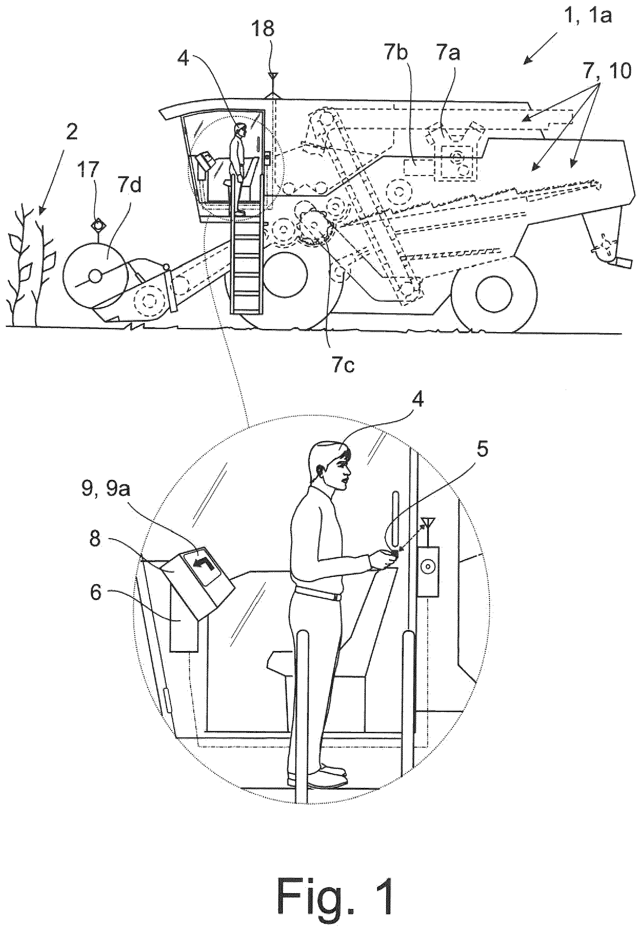

Gemäß einer bevorzugten Ausführungsform umfassen die Parameter 3 eine Zugangsberechtigungsinformation für Funktionen der Vorrichtungsanordnung 7, sodass basierend auf der Zugangsberechtigungsinformation die Rechenvorrichtung 6 einen Zugriff des jeweiligen Bedieners 4 auf die Funktionen freigibt oder sperrt. Dies betrifft den Fall, dass beispielsweise einzelne Bediener 4 eine Arbeitsmaschine 1 wie einen in der Fig. 1 dargestellten Mähdrescher 1a zwar fahren dürfen, diesen aber nicht zum Ernteeinsatz im eigentlichen Sinne bedienen dürfen. In diesem Fall würde die Rechenvorrichtung 6 einen Motor 7a und ein Getriebe 7b des Mähdreschers 1a freigeben, jedoch den Betrieb der Dreschtrommel 7c, der Haspel 7d etc. unterbinden. Es könnte auch ein Bediener 4 nur zur Wartung der Arbeitsmaschine 1 zugangsberechtigt sein und zu keinerlei Fahrt der Arbeitsmaschine 1, sodass auch Motor 7a und Getriebe 7b in diesem Fall durch die Rechenvorrichtung 6 gesperrt würden.

Eine bevorzugte Ausführungsform ist dadurch gekennzeichnet, dass die Vorrichtungsanordnung 7 eine Ausgabevorrichtung 8 zur Ausgabe an den jeweiligen Bediener 4 umfasst. Bei dieser Ausgabevorrichtung 8 kann es sich beispielsweise um eine Anzeige handeln. Vorzugsweise umfassen die Parameter 3 eine Handlungsinformation an den jeweiligen Bediener 4, so dass basierend auf der Handlungsinformation die Ausgabevorrichtung 8 eine Handlungsanweisung 9 an den jeweiligen Bediener 4 ausgibt. Insbesondere kann die Handlungsinformation eine Lenkvorgabe 9a für eine Bewegung der jeweiligen Arbeitsmaschine 1 umfassen, beispielsweise gemäß der Darstellung der Fig. 1 also die Aufforderung, eine Linkskurve zu fahren.

Bevorzugt ist vorgesehen, dass die Vorrichtungsanordnung 7 ein Arbeitsgerät 10 der jeweiligen Arbeitsmaschine 1 zur Bearbeitung des Feldes 2 umfasst und dass die Parameter 3 Geräteeinstellungen zur Einstellung des Arbeitsgeräts 10 bei der Bearbeitung des Feldes 2 umfassen. Dies kann also Einstellparameter wie Drehzahl, Leistung, Übersetzungsverhältnis o.dgl. des Motors 7a, des Getriebes 7b, der Dreschtrommel 7c, der Haspel 7d oder beliebiger weiterer Arbeitsgeräte 10 der Arbeitsmaschine 1 betreffen. Gemäß einer bevorzugten Variante gibt die Ausgabevorrichtung 8 basierend auf den Geräteeinstellungen eine Einstellanweisung an den jeweiligen Bediener 4 aus. Der jeweilige Bediener 4 nimmt also die Einstellung der Arbeitsgeräte 10 vor und die Rechenvorrichtung 6 steuert hier nur die Ausgabevorrichtung 8 an. Gemäß einer alternativen oder zusätzlichen Variante stellt die Rechenvorrichtung 6 basierend auf den Geräteeinstellungen die Arbeitsgeräte 10 ein. Dies kann also ohne Eingreifen des jeweiligen Bedieners 4 erfolgen.

Eine weitere bevorzugte Ausführungsform ist dadurch gekennzeichnet, dass die Parameter 3 eine Sollfahrspur 11 im Feld 2 zum Abfahren durch die jeweilige Arbeitsmaschine 1 umfassen und dass die Geräteeinstellungen zumindest teilweise auf Arbeitsmaschinenpositionen 12 der Sollfahrspur 11 bezogen sind, so dass das Arbeitsgerät 10 entsprechend der Geräteeinstellung bei Erreichen der jeweiligen Arbeitsmaschinenposition 12 eingestellt wird. Solche Sollfahrspuren 11 mit beispielhaften Arbeitsmaschinenpositionen 12 sind in der Fig. 2 dargestellt. Auf diese Weise ist also die Ansteuerung der Vorrichtungsanordnung 7 auch abhängig von Position und damit mittelbar von der Zeit.

Bevorzugt ist das vorschlagsgemäße Berechtigungssystem dadurch gekennzeichnet, dass dem jeweiligen Bediener 4 anwendungsübergreifende Bedienereinstellungen 13 zur Einstellung der Vorrichtungsanordnung 7 zugeordnet sind und dass die Rechenvorrichtung 6 auch basierend auf den Bedienereinstellungen 13 die Vorrichtungsanordnung 7 mit den Parametern 3 ansteuert. Diese anwendungsübergreifenden Bedienereinstellungen 13 gelten also für mehr als ein Anwendungspaket bzw. für mehr als einen Arbeitsprozess. Bei diesen Bedienereinstellungen 13 kann es sich insbesondere um diejenigen oben beschriebenen Einstellungen handeln, welche dem jeweiligen Bediener 4 zugeordnet sind, aber regelmäßig von einem Arbeitsprozess zum nächsten unverändert bleiben, so z. B. eine für den jeweiligen Bediener 4 zugelassene Höchstgeschwindigkeit. Die Ansteuerung des Antriebs der jeweiligen Arbeitsmaschine 1 ermittelt also zunächst die Fahrgeschwindigkeit basierend auf den Parametern 3 des jeweiligen Anwendungspakets, begrenzt die Fahrgeschwindigkeit dann aber ggf. gemäß einer solchen Bedienereinstellung 13.

Selbst wenn die Arbeitsmaschinen 1 der Flotte vom selben Arbeitsmaschinentyp sein sollten, werden sich die entsprechenden Anwendungspakete regelmäßig schon dadurch unterscheiden, dass die Sollfahrspuren 11 auf die verschiedenen Arbeitsmaschinen 1 aufgeteilt sind. Hier ist es bevorzugt, dass die Parameter 3 der Anwendungspakete untereinander unterschiedlich sind. Es kann sogar sein, dass alle Parameter 3 eines Anwendungspakets innerhalb des Arbeitsprozesses einmalig sind. Es gibt dann also keine zwei vollkommen identischen Parameter 3.

Dabei kann die Flotte regelmäßig auch - wie ebenfalls in der Fig. 2 dargestellt - unterschiedliche Arten von Arbeitsmaschinen 1 umfassen. Entsprechend ist es bevorzugt, dass die Arbeitsmaschinen 1 der Flotte von mindestens zwei Arbeitsmaschinentypen sind.

Wenn verschiedene Arbeitsmaschinentypen innerhalb eines Arbeitspakets zum Einsatz kommen, kann eine Bearbeitung des Feldes 2 in der Art einer Prozesskette erfolgen. Hier sieht eine vorschlagsgemäße Ausgestaltung bevorzugt vor, dass der Arbeitsprozess eine mehrstufige Bearbeitung des Feldes 2 in einer Prozesskette umfasst und dass die Anwendungspakete zeitlich aufeinanderfolgende Bearbeitungsstufen an überlappenden Positionen des Feldes 2 betreffen. So fährt die Ballenpresse 1b regelmäßig den Mähdreschern 1a hinterher und das Ladefahrzeug 1c kann den Spuren der Mähdrescher 1a folgen.

Für die Definition der Arbeitsgänge und der Anwendungspakete gibt es grundsätzlich verschiedene Möglichkeiten. Bevorzugt ist es, dass ein zu der Arbeitsmaschine 1 beabstandet angeordneter Zentralrechner 14 den Arbeitsprozess definiert. Alternativ oder zusätzlich kann der Zentralrechner 14 auch die Anwendungspakete den jeweiligen Bedienern 4 zuordnen. Der Zentralrechner 14 ist also entfernt zu der Arbeitsmaschine 1 angeordnet und kann insbesondere ein durch das Internet erreichbarer Server sein. Dabei kann der Zentralrechner 14 aber auch durch einen Client 15 wie etwa einem Hof-PC oder sogar einem Smartphone über das Internet angesteuert werden.

Eine bevorzugte Ausführungsform des vorschlagsgemäßen Verfahrens ist dadurch gekennzeichnet, dass der Zentralrechner 14 die Parameter 3 an die jeweilige Identifikationsvorrichtung 5 überträgt, vorzugsweise, dass die Parameter 3 wie oben angesprochen in einer Speichervorrichtung 16 der jeweiligen Identifikationsvorrichtung 5 abgelegt werden.

Gemäß einer bevorzugten Ausführungsform ist es vorgesehen, dass der Zentralrechner 14 die Parameter 3 an die Rechenvorrichtung 6 überträgt. In diesem Falle werden also die Parameter auch lokal in der Rechenvorrichtung 6 vorgehalten. Dann ist eine Übertragung der Parameter 3 von der Identifikationsvorrichtung 5 an die Rechenvorrichtung 6 entbehrlich. Es ist weiter bevorzugt, dass die Parameter 3 von dem Zentralrechner 14 auf eine Abfrage durch die Rechenvorrichtung 6, welche Abfrage auf der Identifizierung basiert, an die Rechenvorrichtung 6 übertragen werden. Dann werden die Parameter 3 bedarfsweise an die Rechenvorrichtung 6 übertragen und es muss keine größere Datenbank für mehrere potenzielle Bediener in der Rechenvorrichtung 6 vorgehalten werden.

Eine bevorzugte Ausführungsform ist dadurch gekennzeichnet, dass während einer Bearbeitung der Zentralrechner 14 basierend auf empfangenen Daten aktualisierte Parameter bestimmt und dass der Zentralrechner 14 die aktualisierten Parameter an die jeweilige Identifikationsvorrichtung 5 und/oder an die Rechenvorrichtung 6 überträgt, sodass die aktualisierten Parameter zumindest teilweise die Parameter 3 für die Ansteuerung der Vorrichtungsanordnung 7 ersetzen. Auf diese Weise kann dynamisch auf Eingaben, Zustandsänderungen oder sonstige Ereignisse reagiert werden.

Speziell kann es vorgesehen sein, dass die empfangenen Daten eine Statusinformation zur Angabe eines Zustands der Bearbeitung des Feldes im Arbeitsprozess umfassen. Insbesondere kann es sein, dass die Statusinformationen auf Messdaten einer Sensorvorrichtung 17 der jeweiligen Arbeitsvorrichtung 1 zur Erfassung des Zustands der Bearbeitung der Arbeitsmaschine 1 basieren und dass die Statusinformationen von der Rechenvorrichtung 6 erzeugt und an den Zentralrechner 14 über eine Kommunikationsvorrichtung 18 der jeweiligen Arbeitsmaschine 1 übertragen werden. Ein solcher Zustand der Bearbeitung kann sich einerseits auf das Feld 2 beziehen und z. B. Feuchtigkeits- oder sonstige Informationen zu dem Feld 2 aufweisen. Der Zustand der Bearbeitung kann sich andererseits aber auch auf ein Arbeitsgerät 10 der jeweiligen Arbeitsmaschine 1 bzw. auf an dem Arbeitsgerät 10 erfasste Werte wie Leistung, Drehzahl, Höheneinstellung etc. beziehen.

Dies ermöglicht es auch, Abweichungen von dem jeweiligen Anwendungspaket durch eine der Arbeitsmaschinen 1 durch eine Anpassung der Parameter 3 für eine andere Arbeitsmaschine 1 dynamisch zu kompensieren. Die Kommunikationsvorrichtung 18 kann auch zum Empfang der Parameter 3 von dem Zentralrechner 14 und zur Übertragung der Abfrage an den Zentralrechner 14 dienen.

Eine bevorzugte Ausführungsform ist dadurch gekennzeichnet, dass der jeweilige Bediener 4 sich durch eine insbesondere drahtlose Übertragung von dem jeweiligen Bediener 4 zugeordneten Identifizierungsdaten 19 an die Rechenvorrichtung 6 identifiziert. Insbesondere können die Identifizierungsdaten 19 von der jeweiligen Identifikationsvorrichtung 5 an die Rechenvorrichtung 6 übertragen werden. Die drahtlose Übertragung kann auf RFID-Basis erfolgen. Gemäß einer Variante kann es sein, dass mit den Identifizierungsdaten 19 die Parameter 3 an die Rechenvorrichtung 6 übertragen werden. In diesem Fall sind die Parameter 3 also jedenfalls auch in der jeweiligen Identifikationsvorrichtung 5 hinterlegt. Es kann auch sein, dass mit den Identifizierungsdaten 19 die Bedienereinstellungen 13 an die Rechenvorrichtung 6 übertragen werden. Auch diese wären dann in der jeweiligen Identifikationsvorrichtung 5 hinterlegt.

Weitere bevorzugte Ausgestaltungen des vorschlagsgemäßen Farmmanagementsystems ergeben sich aus den bevorzugten Ausgestaltungen des vorschlagsgemäßen Verfahrens.

### Bezugszeichenliste

- 1: Arbeitsmaschine
- 1a: Mähdrescher
- 1b: Ballenpresse
- 1c: Ladefahrzeug
- 2: Feld
- 3: Anwendungspaketspezifische Parameter
- 4: Bediener
- 5: Identifikationsvorrichtung
- 6: Rechenvorrichtung
- 7: Vorrichtungsanordnung
- 7a: Motor
- 7b: Getriebe
- 7c: Dreschtrommel
- 7d: Haspel
- 8: Ausgabevorrichtung
- 9: Handlungsanweisung
- 9a: Lenkvorgabe
- 10: Arbeitsgerät
- 11: Sollfahrspur
- 12: Arbeitsmaschinenpositionen
- 13: Bedienereinstellungen
- 14: Zentralrechner
- 15: Client
- 16: Speichervorrichtung
- 17: Sensorvorrichtung
- 18: Kommunikationsvorrichtung
- 19: Identifizierungsdaten

## Patentansprüche

1. Berechtigungssystem zum Betreiben von landwirtschaftlichen Arbeitsmaschinen (1), wobei ein Arbeitsprozess, der die Bearbeitung eines Feldes (2) durch eine Flotte von Arbeitsmaschinen (1) umfasst, definiert ist,
**dadurch gekennzeichnet,**
**dass** der Arbeitsprozess je ein Anwendungspaket für jede Arbeitsmaschine (1) umfasst, dass einem jeweiligen Bediener (4) einer der Arbeitsmaschinen (1) das Anwendungspaket zur Bearbeitung durch die jeweilige Arbeitsmaschine (1) zugeordnet ist, wobei das Berechtigungssystem eine Identifikationsvorrichtung (5), insbesondere einen Funkschlüssel o. dgl., umfasst und der jeweilige Bediener (4) sich durch eine jeweilige Identifikationsvorrichtung (5) an einer Rechenvorrichtung (6) der jeweiligen Arbeitsmaschine (1) identifiziert, dass jedes Anwendungspaket anwendungspaketspezifische Parameter (3) aufweist und dass die Rechenvorrichtung (6) basierend auf der Identifizierung des jeweiligen Bedieners (4) eine Vorrichtungsanordnung (7) der jeweiligen Arbeitsmaschine (1) mit den Parametern (3) des dem jeweiligen Bediener (4) zugeordneten Anwendungspakets ansteuert, wobei dem jeweiligen Bediener (4) anwendungsübergreifende Bedienereinstellungen (13) zur Einstellung der Vorrichtungsanordnung (7) zugeordnet sind und dass die Rechenvorrichtung (6) auch basierend auf den Bedienereinstellungen (13) die Vorrichtungsanordnung (7) mit den Parametern (3) ansteuert und der Arbeitsprozess eine mehrstufige Bearbeitung des Feldes (2) in einer Prozesskette umfasst und dass die Anwendungspakete zeitlich aufeinanderfolgende Bearbeitungsstufen betreffen.

2. Berechtigungssystem nach Anspruch 1, **dadurch gekennzeichnet, dass** die jeweilige Identifikationsvorrichtung (5) eine Speichervorrichtung (16) aufweist und dass in der Identifikationsvorrichtung (5) ausschließlich Identifizierungsdaten (19) abgelegt sind.

3. Berechtigungssystem nach Anspruch 1 oder 2, **dadurch gekennzeichnet, dass** die Parameter (3) eine Zugangsberechtigungsinformation für Funktionen der Vorrichtungsanordnung (7) umfassen, sodass basierend auf der Zugangsberechtigungsinformation die Rechenvorrichtung (6) einen Zugriff des jeweiligen Bedieners (4) auf die Funktionen freigibt oder sperrt.

4. Berechtigungssystem nach einem der vorhergehenden Ansprüche, **dadurch gekennzeichnet, dass** die Vorrichtungsanordnung (7) eine Ausgabevorrichtung (8) zur Ausgabe an den jeweiligen Bediener (4) umfasst, vorzugsweise, dass die Parameter (3) eine Handlungsinformation an den jeweiligen Bediener (4) umfassen, sodass basierend auf der Handlungsinformation die Ausgabevorrichtung (8) eine Handlungsanweisung (9) an den jeweiligen Bediener (4) ausgibt, insbesondere, dass die Handlungsinformation eine Lenkvorgabe (9a) für eine Bewegung der jeweiligen Arbeitsmaschine (1) umfasst.

5. Berechtigungssystem nach einem der vorhergehenden Ansprüche, **dadurch gekennzeichnet, dass** die Vorrichtungsanordnung (7) ein Arbeitsgerät (10) der jeweiligen Arbeitsmaschine (1) zur Bearbeitung des Feldes (2) umfasst und dass die Parameter (3) Geräteeinstellungen zur Einstellung des Arbeitsgeräts (10) bei der Bearbeitung des Feldes (2) umfassen, vorzugsweise, dass die Ausgabevorrichtung (8) basierend auf den Geräteeinstellungen eine Einstellanweisung an den jeweiligen Bediener (4) ausgibt und/oder dass die Rechenvorrichtung (6) basierend auf den Geräteeinstellungen die Arbeitsgeräte (10) einstellt.

6. Berechtigungssystem nach Anspruch 5, **dadurch gekennzeichnet, dass** die Parameter (3) eine Sollfahrspur (11) im Feld (2) zum Abfahren durch die jeweilige Arbeitsmaschine (1) umfassen und dass die Geräteeinstellungen zumindest teilweise auf Arbeitsmaschinenpositionen (12) der Sollfahrspur (1) bezogen sind, sodass das Arbeitsgerät (10) entsprechend der Geräteeinstellung bei Erreichen der jeweiligen Arbeitsmaschinenposition (12) eingestellt wird.

7. Berechtigungssystem nach einem der vorhergehenden Ansprüche, **dadurch gekennzeichnet, dass** die Parameter (3) der Anwendungspakete untereinander unterschiedlich sind.

8. Berechtigungssystem nach einem der vorhergehenden Ansprüche, **dadurch gekennzeichnet, dass** ein zu den Arbeitsmaschinen (1) beabstandet angeordneter Zentralrechner (14) vorgesehen ist, der den Arbeitsprozess definiert und/oder die Anwendungspakete den jeweiligen Bedienern (4) zuordnet.

9. Berechtigungssystem nach Anspruch 8, **dadurch gekennzeichnet, dass** der Zentralrechner (14) die Parameter (3) an die Rechenvorrichtung (6) überträgt und dass die Parameter (3) von dem Zentralrechner (14) auf eine Abfrage durch die Rechenvorrichtung (6), welche Abfrage auf der Identifizierung basiert, an die Rechenvorrichtung (6) übertragen werden.

10. Berechtigungssystem nach einem der Ansprüche 8 oder 9, **dadurch gekennzeichnet, dass** während einer Bearbeitung der Zentralrechner (14) basierend auf empfangenen Daten aktualisierte Parameter bestimmt und dass der Zentralrechner (14) die aktualisierten Parameter an die jeweilige Identifikationsvorrichtung (5) und/oder an die Rechenvorrichtung (6) überträgt, sodass die aktualisierten Parameter zumindest teilweise die Parameter (3) für die Ansteuerung der Vorrichtungsanordnung (7) ersetzen.

11. Berechtigungssystem nach Anspruch 10, **dadurch gekennzeichnet, dass** die empfangenen Daten eine Statusinformation zur Angabe eines Zustands der Bearbeitung des Feldes (2) im Arbeitsprozess umfassen, vorzugsweise, dass die Statusinformationen auf Messdaten einer Sensorvorrichtung (17) der jeweiligen Arbeitsmaschine (1) zur Erfassung des Zustands der Bearbeitung der Arbeitsmaschine (1) basieren und dass die Statusinformationen von der Rechenvorrichtung (6) erzeugt und an den Zentralrechner (14) über eine Kommunikationsvorrichtung (18) der jeweiligen Arbeitsmaschine (1) übertragen werden.

12. Berechtigungssystem nach einem der vorhergehenden Ansprüche, **dadurch gekennzeichnet, dass** der jeweilige Bediener (4) sich durch eine insbesondere drahtlose Übertragung von dem jeweiligen Bediener (4) zugeordneten Identifizierungsdaten (19) an die Rechenvorrichtung (6) identifiziert, vorzugsweise, dass mit den Identifizierungsdaten (19) die Parameter (3) an die Rechenvorrichtung (6) übertragen werden, insbesondere, dass mit den Identifizierungsdaten (19) die Bedienereinstellungen (13) an die Rechenvorrichtung (6) übertragen werden.

13. Identifikationsvorrichtung für ein Berechtigungssystem nach einem der vorhergehenden Ansprüche,
**dadurch gekennzeichnet,**
**dass** die jeweilige Identifikationsvorrichtung (5) eine Speichervorrichtung (16) aufweist und dass zumindest ein Teil der anwendungspaketspezifischen Parameter (3) in der Speichervorrichtung (16) der jeweiligen Identifikationsvorrichtung (5) abgelegt ist wobei dem jeweiligen Bediener (4) anwendungsübergreifende Bedienereinstellungen (13) zu Einstellung der Vorrichtungsanordnung (7) zugeordnet sind und dass die Rechenvorrichtung (6) auch basierend auf den Bedienereinstellungen (13) die Vorrichtungsanordnung (7) mit Parametern (3) ansteuert und der Arbeitsprozess eine mehrstufige Bearbeitung des Feldes (2) in einer Prozesskette umfasst und dass die Anwendungspakete zeitlich aufeinanderfolgende Bearbeitungsstufen betreffen.

## Claims

1. An authorisation system for operating agricultural working machines (1), wherein a working process which includes processing of a field (2) by a fleet of working machines (1) is defined,
**characterised in that** the working process includes a respective application package for each working machine (1), associated with a respective operator (4) of one of the working machines (1) is the application package for processing by the respective working machine (1), wherein the authorisation system includes an identification device (5), in particular a radio key or the like, and the respective operator (4) is defined by a respective identification device (5) at a computing device (6) of the respective working machine (1), each application package has application package-specific parameters (3) and the computing device (6) based on the identification of the respective operator (4) actuates an apparatus arrangement (7) of the respective working machine (1) with the parameters (3) of the application package associated with the respective operator (4), wherein associated with the respective operator (4) are cross-application operator settings (13) for setting the apparatus arrangement (7) and the computing device (6) also actuates the apparatus arrangement (7) with the parameters based on the operator settings (13) and the working process includes multi-stage processing of the field in a process chain and the application packages concern processing stages which occur in time succession.

2. An authorisation system according to claim 1 **characterised in that** the respective identification device (5) has a memory device (16) and that exclusively identification data (9) are stored in the identification device (5).

3. An authorisation system according to claim 1 or claim 2 **characterised in that** the parameters (3) include access authorisation information for functions of the apparatus arrangement (7) so that based on the access authorisation information the computing device (6) enables or blocks access of the respective operator (4) to the functions.

4. An authorisation system according to one of the preceding claims **characterised in that** the apparatus arrangement (7) includes an output device (8) for output to the respective operator (4), and preferably the parameters (3) include handling information to the respective operator (4) so that based on the handling information the output device (8) outputs a handling instruction (9) to the respective operator (4), and in particular the handling information includes a steering input (9a) for a movement of the respective working machine (1).

5. An authorisation system according to one of the preceding claims **characterised in that** the apparatus arrangement (7) includes a working implement (10) of the respective working machine (1) for processing the field (2) and the parameters (3) include implement settings for setting the working implement (10) when processing the field (2), preferably the output device (8) based on the implement settings outputs a setting instruction to the respective operator (4) and/or the computing device (6) sets the working implements (10) based on the implement settings.

6. An authorisation system according to claim 5 **characterised in that** the parameters (3) include a target travel path (11) in the field (2) to be driven by the respective working machine (1) and the implement settings are at least partially related to working machine positions (12) of the target travel path (1) so that the working implement (10) is set in accordance with the implement setting upon reaching the respective working machine position (12).

7. An authorisation system according to one of the preceding claims **characterised in that** the parameters (3) of the application packages are different from each other.

8. An authorisation system according to one of the preceding claims **characterised in that** there is provided a central computer (14) arranged spaced in relation to the working machines (1) and which defines the working process and/or associates the application packages with the respective operators (4).

9. An authorisation system according to claim 8 **characterised in that** the central computer (14) transmits the parameters (3) to the computing device (6) and the parameters (3) are transmitted to the computing device (6) by the central computer (14) upon query by the computing device (6), which query is based on the identification.

10. An authorisation system according to one of claims 8 and 9 **characterised in that** during a processing operation the central computer (14) determines updated parameters based on received data and the central computer (14) transmits the updated parameters to the respective identification device (5) and/or to the computing device (6) so that the updated parameters at least partially replace the parameters (3) for actuation of the apparatus arrangement (7).

11. An authorisation system according to claim 10 **characterised in that** the received data include status information for indicating a status of processing of the field (2) in the working process, and preferably the status information is based on measurement data of a sensor device (17) of the respective working machine (1) for detecting the state of processing of the working machine (1) and the status information is produced by the computing device (6) and transmitted to the central computer (14) by way of a communication device (18) of the respective working machine (1).

12. An authorisation system according to one of the preceding claims **characterised in that** the respective operator (4) identifies himself by an in particular wireless transmission of identification data (19) associated with the respective operator (4) to the computing device (6), and preferably the parameters are transmitted with the identification data (19) to the computing device (6), and in particular the operator settings (13) are transmitted to the computing device (6) with the identification data (19).

13. An identification device for an authorisation system according to one of the preceding claims
**characterised in that**
the respective identification device (5) has a memory device (16) and at least a part of the application package-specific parameters (3) are stored in the memory device (16) of the respective identification device (5), wherein associated with the respective operator (4) are cross-application operator settings (13) for setting the apparatus arrangement (7) and the computing device (6) also actuates the apparatus arrangement (7) with parameters (3) based on the operator settings (13) and the working process includes multi-stage processing of the field (2) in a process chain and the application packages concern processing stages which occur in time succession.

## Revendications

1. Système d'autorisation pour opérer des machines de travail agricoles (1), un processus de travail, qui comprend le travail d'un champ (2) par une flotte de machines de travail, étant défini, **caractérisé en ce que** le processus de travail comprend un paquet d'applications pour chaque machine de travail (1), **en ce qu'**à un utilisateur respectif (4) d'une des machines de travail (1) est associé le paquet d'applications pour travailler à l'aide de la machine de travail respective (1), le système d'autorisation comprenant un dispositif d'identification (5), en particulier une radio-clé ou analogue, et l'utilisateur respectif (4) s'identifiant par l'intermédiaire d'un dispositif d'identification respectif (5) au niveau d'un dispositif de calcul (6) de la machine de travail respective (1), **en ce que** chaque paquet d'applications comporte des paramètres (3) spécifiques au paquet d'applications, et **en ce que**, sur la base de l'identification de l'utilisateur respectif (4), le dispositif de calcul (6) commande un agencement de dispositif (7) de la machine de travail respective (1) avec les paramètres (3) du paquet d'applications associé à l'utilisateur respectif (4), à l'utilisateur respectif (4) étant associés des réglages utilisateur (13) englobant toutes les applications pour régler l'agencement de dispositif (7), et **en ce que** le dispositif de calcul (6) commande l'agencement de dispositif (7) avec les paramètres (3) également sur la base des réglages utilisateur (13), et le processus de travail comprend un traitement du champ (2) en plusieurs étapes par une chaîne de processus, et **en ce que** les paquets d'applications se rapportent à des étapes de travail qui se succèdent dans le temps.

2. Système d'autorisation selon la revendication 1, **caractérisé en ce que** le dispositif d'identification respectif (5) comporte un dispositif de mémoire (16), et **en ce que** dans le dispositif d'identification (5) ne sont enregistrées que des données d'identification (19) .

3. Système d'autorisation selon la revendication 1 ou 2, **caractérisé en ce que** les paramètres (3) comprennent une information d'autorisation d'accès à des fonctions de l'agencement de dispositif (7), de sorte que, sur la base de l'information d'autorisation d'accès, le dispositif de calcul (6) autorise ou interdit un accès de l'utilisateur respectif (4) aux fonctions.

4. Système d'autorisation selon une des revendications précédentes, **caractérisé en ce que** l'agencement de dispositif (7) comprend un dispositif d'affichage (8) en vue d'un affichage destiné à l'utilisateur respectif (4), de préférence **en ce que** les paramètres (3) comprennent une information de manoeuvre destinée à l'utilisateur respectif (4), de façon que, sur la base de l'information de manoeuvre, le dispositif d'affichage (8) affiche une instruction de manoeuvre (9) destinée à l'utilisateur respectif (4), en particulier **en ce que** l'information de manoeuvre comprend une prescription directionnelle (9a) pour un déplacement de la machine de travail respective (1).

5. Système d'autorisation selon une des revendications précédentes, **caractérisé en ce que** l'agencement de dispositif (7) comprend un appareil (10) de la machine de travail respective (1) pour travailler le champ (2), et **en ce que** les paramètres (3) comprennent des réglages d'appareil pour régler l'appareil de travail (10) lors du travail du champ (2), de préférence **en ce que** le dispositif d'affichage (8), sur la base des réglages d'appareil, affiche une instruction de réglage destinée à l'utilisateur respectif (4) et/ou **en ce que** le dispositif de calcul (6) règle les appareils de travail (10) sur la base des réglages d'appareil.

6. Système d'autorisation selon la revendication 5, **caractérisé en ce que** les paramètres (3) comprennent une trace de passage de consigne (11) à suivre dans le champ (2) par la machine de travail respective (1), et **en ce que** les réglages d'appareil se rapportent au moins en partie à des positions de machine de travail (12) sur la trace de passage de consigne (1), de sorte que, à l'atteinte de la position de machine de travail respective (12), l'appareil de travail (10) est réglé conformément au réglage d'appareil.

7. Système d'autorisation selon une des revendications précédentes, **caractérisé en ce que** les paramètres (3) des paquets d'applications sont différents les uns des autres.

8. Système d'autorisation selon une des revendications précédentes, **caractérisé en ce qu'**il est prévu un calculateur central (14) qui est disposé à distance des machines de travail (1) et qui définit le processus de travail et/ou associe les paquets d'applications aux utilisateurs respectifs (4).

9. Système d'autorisation selon la revendication 8, **caractérisé en ce que** le calculateur central (14) transmet les paramètres (3) au dispositif de calcul (6), et **en ce que** les paramètres (3) sont transmis du calculateur central (14) au dispositif de calcul (6) à la demande du dispositif de calcul (6), ladite demande étant basée sur l'identification.

10. Système d'autorisation selon une des revendications 8 ou 9, **caractérisé en ce que**, pendant un travail, le calculateur central (14) détermine des paramètres actualisés sur la base de données reçues, et **en ce que** le calculateur central (14) transmet les paramètres actualisés au dispositif d'identification respectif (5) et/ou au dispositif de calcul (6), de sorte que les paramètres actualisés remplacent au moins en partie les paramètres (3) de commande de l'agencement de dispositif (7).

11. Système d'autorisation selon la revendication 10, **caractérisé en ce que** les données reçues comprennent une information de statut indiquant un état de travail du champ (2) dans le processus de travail, de préférence **en ce que** l'information de statut repose sur des données de mesure d'un dispositif de capteur (17) de la machine de travail respective (1) pour détecter l'état de travail de la machine de travail (1), et **en ce que** les informations de statut sont générées par le dispositif de calcul (6) et transmises au calculateur central (14) par l'intermédiaire d'un dispositif de communication (18) de la machine de travail respective (1).

12. Système d'autorisation selon une des revendications précédentes, **caractérisé en ce que** l'utilisateur respectif (4) s'identifie par l'intermédiaire d'une transmission en particulier sans fil, au dispositif de calcul (6), de données d'identification (19) associées à l'utilisateur respectif (4), de préférence **en ce qu'**avec les données d'identification (19), les paramètres (3) sont transmis au dispositif de calcul (6), en particulier **en ce qu'**avec les données d'identification (19), les réglages utilisateur (13) sont transmis au dispositif de calcul (6) .

13. Dispositif d'identification pour un système d'autorisation selon une des revendications précédentes, **caractérisé en ce que** le dispositif d'identification respectif (5) comporte un dispositif de mémoire (16) et **en ce qu'**au moins une partie des paramètres (3) spécifiques au paquet d'applications est enregistrée dans le dispositif de mémoire (16) du dispositif d'identification respectif (5), à l'utilisateur respectif (4) étant associés des réglages utilisateur (13) englobant toutes les applications pour régler l'agencement de dispositif (7), et **en ce que** le dispositif de calcul (6) commande l'agencement de dispositif (7) avec des paramètres (3) également sur la base des réglages utilisateur (13), et le processus de travail comprend un traitement du champ (2) en plusieurs étapes par une chaîne de processus, et **en ce que** les paquets d'applications se rapportent à des étapes de travail qui se succèdent dans le temps.
